(19) Europäisches Patentamt
European Patent Office
Office européen des brevets

(11) **EP 2 012 922 B1**

(12) **EUROPÄISCHE PATENTSCHRIFT**

(45) Veröffentlichungstag und Bekanntmachung des Hinweises auf die Patenterteilung:
**18.07.2012 Patentblatt 2012/29**

(21) Anmeldenummer: **07724837.5**

(22) Anmeldetag: **03.05.2007**

(51) Int Cl.:
*B01J 31/22* (2006.01)     *B01J 35/00* (2006.01)
*B01J 32/00* (2006.01)     *C08G 63/85* (2006.01)
*C08G 63/183* (2006.01)     *B01J 31/26* (2006.01)

(86) Internationale Anmeldenummer:
**PCT/EP2007/003911**

(87) Internationale Veröffentlichungsnummer:
**WO 2007/124957 (08.11.2007 Gazette 2007/45)**

(54) **KATALYSATOR ZUR POLYESTERHERSTELLUNG, VERWENDUNG DES KATALYSATOREN ZUR HERSTELLUNG VON POLYESTER SOWIE POLYESTER, ERHALTEN UNTER EINSATZ DES KATALYSATOREN**

CATALYST FOR THE PRODUCTION OF POLYESTER, USE OF THE CATALYST FOR THE PRODUCTION OF POLYESTER, AND POLYESTER OBTAINED BY THE USE OF THE CATALYST

CATALYSEUR POUR LA FABRICATION DE POLYESTER, UTILISATION DU CATALYSEUR POUR LA FABRICATION DE POLYESTER AINSI QUE POLYESTER, OBTENTION PAR UTILISATION DU CATALYSEUR

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **03.05.2006 DE 102006020558**

(43) Veröffentlichungstag der Anmeldung:
**14.01.2009 Patentblatt 2009/03**

(73) Patentinhaber: **Lurgi Zimmer GmbH**
**60295 Frankfurt am Main (DE)**

(72) Erfinder: **OTTO, Brigitta**
**14715 Milow (DE)**

(74) Vertreter: **Grünecker, Kinkeldey,**
**Stockmair & Schwanhäusser**
**Leopoldstrasse 4**
**80802 München (DE)**

(56) Entgegenhaltungen:
**EP-A2- 1 031 590     DE-A1- 4 235 302**
**DE-A1- 19 627 591     GB-A- 864 799**
**US-A- 4 512 928     US-A- 5 981 690**
**US-A1- 2004 254 330**

• **DATABASE WPI Week 200613 Derwent Publications Ltd., London, GB; AN 2006-121323 XP002446565 & JP 2006 022241 A (TEIJIN FIBER KK) 26. Januar 2006 (2006-01-26)**

**Beschreibung**

Die vorliegende Erfindung betrifft einen Katalysator, geeignet zur Herstellung von Polyester, dessen Verwendung sowie ein Herstellungsverfahren unter Einsatz des Katalysatoren.

**Stand der Technik**

Die Herstellung von Polyestern erfolgt im allgemeinen in der Weise, dass ein Diol mit einer Dicarbonsäure oder einem niederem Dicarbonsäureester, zum Beispiel einem Dimethylester, zum entsprechenden Dicarbonsäureester umgesetzt wird, der bei ansteigenden Temperaturen und verminderten Druck ein- und mehrstufig polykondensiert wird. Für die Veresterung und/oder die Umesterung und Polykondensation werden je nach Wahl der Diole bzw. Dicarbonsäuren oder Dicarbonsäureester verschiedene Katalysatoren eingesetzt.

In üblicher Weise wird dabei ein Katalysator eingesetzt, der polyvalente Metallkationen umfasst, die in der Lage sind, mit den funktionellen Gruppen, besonders mit den Hydroxylendgruppen Übergangskomplexe zu bilden, wobei für die Polykondensation bevorzugte Metallionen drei oder mehr freie Valenzen aufweisen. Typische Beispiele sind $Sb^{3+}$, $Pb^{4+}$, $Ti^{4+}$, $Bi^{3+}$, $As^{3+}$, $Si^{4+}$, $Sn^{4+}$, $Al^{3+}$ und $Ge^{4+}$. In der industriellen Praxis, insbesondere für die Polykondensation von Polyethylenterephthalat (PET) haben sich insbesondere $Sb^{3+}$ und $Ge^{4+}$ bewährt, wobei Metallkonzentrationen von 150 bis 300 ppm Sb und 20 bis 120 ppm Ge in Abhängigkeit von der Art des Polykondensationsreaktors effektiv sind.

Mit den beiden oben genannten Metallionen lassen sich Polyesterprodukte mit einer Vielzahl von Eigenschaften herstellen. Allerdings ist insbesondere im Hinblick auf die katalytisch aktive Komponente $Sb^{3+}$ nachteilig, dass diese ggf. umweltschädigende Einflüsse ausüben kann. Es hat daher nicht an Versuchen gefehlt, andere Metallionen als katalytisch wirksame Komponente zu etablieren, insbesondere basierend auf Ti.

Die EP 1 031 590 A2 offenbart einen Katalysator zur Darstellung von Polyestern, sowie seine Herstellung und die Verwendung davon. Dieser Katalysator umfasst eine feinkörnige und poröse Trägersubstanz sowie eine in den Poren dieser Trägersubstanz adsorbierte katalytisch wirksame Metallverbindung.

Die WO 02/090419 offenbart eine Zusammensetzung sowie ein Verfahren zur Herstellung von Polyestern. Diese Zusammensetzung umfasst eine Trägersubstanz, an die katalytisch wirksame Metallverbindungen adsorbiert sind, sowie eine phosphorhaltige Komponente.

Die DE 103 39 742 A1 beschreibt einen Katalysator, geeignet zur Herstellung von Polyestern, wobei der Katalysator aus einem nanoskaligen anorganischen Oxid als Trägermaterial mit mindestens einer darin absorbierten titanhaltigen Verbindung besteht.

Die US 2004/0,254,330 A1 beschreibt Polykondensationsverfahren. Diese Entgegenhaltung beschreibt eine Vielzahl an katalytisch wirksamen Komponenten, wie Kobalt, Antimon, Mangan oder Zink oder Titankomplexe, umfassend eine Titanverbindung, ein Komplexierungsmittel und weitere Komponenten. Zusätzlich können Löslichkeitspromotoren vorliegen und weitere Komponenten, wie Sulfonsäurekomponenten. Möglich ist auch die Anwesenheit von Cokatalysatoren oder Komponenten, die als Toner bezeichnet werden. Beispiele derartiger Toner sind Farbstoffe, die über einen weiten Gewichtsanteilsbereich enthalten sein können. Diese Toner sollen in Übereinstimmung mit der Offenbarung der US 2004/0,254,330 A1 einen Farbausgleich für das hergestellte Polyesterprodukt gewährleisten.

Konventionelle Katalysatorkomponenten, wie beispielsweise das in der vorstehend diskutierten US-Patentanmeldung genannte Antimon, sind jedoch im Hinblick auf Umweltgesichtspunkte sowie Gesundheitsgesichtspunkte nachteilig. Antimon ist jedoch der am häufigsten eingesetzte Katalysator zur Polyesterherstellung, so dass hier dringend nach Alternativen gesucht werden muss. Germanium ist ein Beispiel einer alternativen katalytisch wirksamen Verbindung, jedoch ist Germanium ungefähr zehnmal so teuer wie Antimon, so dass aus Kostengründen der Einsatz von Germanium beschränkt ist. Eine weitere Alternative ist der Einsatz von Titan als katalytisch wirksame Komponente.

DE 42 35 302 betrifft thermoplastische Formmassen auf Basis von Polyalkylenterephthalat.

US 4,512,928 beschreibt Pyrophosphato-Titanat-Addukte.

GB 864,799 betrifft farbige thermoplastische Zusammensetzungen.

DE 196 27 591 beschreibt ein Verfahren zur Herstellung von Polyestern.

US 5,981,690 offenbart Titanat-Ligand Katalysatoren zur Herstellung von Polymeren wie PET und PPT.

JP 2004-202727 betrifft Polyesterzusammensetzungen, die einen aromatischen Polyester enthalten.

Nachteilig im Hinblick auf den Einsatz von Ti als katalytisch wirksame Metallkomponente in Katalysatoren zur Polykondensation von Polyestern ist allerdings die hohe Hydrolyseempfindlichkeit, zum Beispiel der üblichen Titanalkoxide, sowie die derartigen Verbindungen innewohnende Präzipitationsneigung sowie die Fähigkeit farbige Komplexverbindungen zu erzeugen, die sich nachteilig auf die Produktqualität auswirken. Weiterhin sind katalytisch wirksame Zusammensetzungen auf Titanbasis bei der Herstellung von Polyestern nicht in der Lage eine genügend hohe Aktivität bei der Polykondensation in der Festphase zu zeigen, einem Verfahrensschritt, der insbesondere notwendig ist zur Herstellung von Polyestermaterialien für Verpackungszwecke.

## Aufgabe der vorliegenden Erfindung

Im Hinblick auf die oben geschilderten Nachteile ist es die Aufgabe der vorliegenden Erfindung eine katalytisch wirksame Zusammensetzung anzugeben, geeignet zur Herstellung von Polyestern, mit der Polyester einer zufriedenstellenden Qualität (mechanische Eigenschaften, optische Eigenschaften, Polykondensationsgrad usw.) erhalten werden können, wobei auf den Einsatz von antimonhaltigen Komponenten verzichtet werden kann. Weiterhin ist es die Aufgabe der vorliegenden Erfindung ein entsprechend verbessertes Verfahren zur Herstellung von Polyestern zur Verfügung zu stellen.

## Kurze Beschreibung der Erfindung

Die oben gestellte Aufgabe wird durch den Gegenstand des Anspruchs 1 der vorliegenden Anmeldung gelöst. Bevorzugte Ausführungsformen sind in den Unteransprüchen 2 bis 10 sowie in der nachfolgenden Beschreibung aufgeführt. Weiterhin stellt die vorliegende Erfindung ein Verfahren zur Herstellung von Polyester zur Verfügung, wie in Anspruch 11 definiert. Bevorzugte Ausführungsformen dieses Verfahrens finden sich in den Unteransprüchen 12 bis 16 sowie der nachfolgenden Beschreibung. Schließlich stellt die vorliegende Erfindung noch die Verwendung des erfindungsgemäßen Katalysatoren zur Herstellung von Polyester zur Verfügung, wie in Anspruch 17 definiert, sowie Polyesterprodukte, wie in Anspruch 18 angegeben, sowie bevorzugte Ausführungsformen davon, wie in den Ansprüchen 19 und 20 angegeben.

Weitere bevorzugte Ausführungsformen ergeben sich aus der nachfolgenden Beschreibung.

## Detaillierte Beschreibung der Erfindung

Die vorliegende Erfindung beruht auf der überraschenden Erkenntnis, dass eine Zusammensetzung, umfassend mindestens eine Titanverbindung sowie ein schwefelhaltiges Silikat und ein Trägs material mit einer spezifischen Oberfläche von 400 $m^2$/g oder mehr eine katalytisch aktive Zusammensetzung zur Herstellung von Polyestern ist, d.h. eine Zusammensetzung, die sowohl die Veresterungsreaktion, die Umesterungsreaktion als auch die Kondensationsreaktion bei der Herstellung von Polyestern katalysiert.

Die Vorteile der vorliegenden Erfindung sind insbesondere die sehr zufriedenstellenden (schnellen) Reaktionsgeschwindigkeiten, sowohl in der Polykondensation als auch in einer nachfolgenden Festphasenkondensation, bei gleichzeitig sehr geringen Titangehalten. Die Katalysatorkomponente, in Übereinstimmung mit der vorliegenden Erfindung, erlaubt darüber hinaus direkt den Erhalt eines Produkts mit einer sehr guten Grundfarbe, so dass allenfalls noch geringe Farbstoffzusätze notwendig sind, um die Produktfarbe an die Erfordernisse des jeweiligen Abnehmers/Einsatzsgebiets anzupassen. Eine Gelbfärbung, die insbesondere als nachteilig angesehen wird, wird durch die erfindungsgemäße Katalysatorkombination vermieden, was einen immensen Fortschritt gegenüber dem konventionellen titanhaltigen Katalysatoren darstellt.

Neben den oben genannten wesentlichen Komponenten, d. h. Titanverbindung und schwefelhaltiges Silikat und ein Träges material mit eine spezifischen Oberfläche von 400 $m^2$/g oder mehr , kann die Zusammensetzung der vorliegenden Erfindung noch weitere optionale Komponenten umfassen, die nachfolgend beschrieben werden.

Die erfindungsgemäße Zusammensetzung, wie vorstehend ausgeführt, ist geeignet zur Katalyse bei der Herstellung von Polyestern. Somit stellt die vorliegende Erfindung auch die Verwendung der erfindungsgemäßen Zusammensetzung zur Herstellung von Polyester zur Verfügung. Schließlich stellt die vorliegende Erfindung auch noch ein Verfahren zur Herstellung von Polyester zur Verfügung, bei dem die erfindungsgemäße Zusammensetzung als Katalysator angesetzt wird, sowie ein Polyesterprodukt, umfassend die erfindungsgemäße Zusammensetzung, d.h. mindestens eine Titankomponente sowie ein schwefelhaltiges Silikat.

Als erfindungsgemäß einzusetzende Titankomponente können die bereits im Zusammenhang mit der Herstellung von Polyestern bekannten Titanverbindungen eingesetzt werden, insbesondere Tetraalkoxide des Titans sowie andere Titanverbindungen, die Titan in der Oxidationsstufe +4 umfassen. Bevorzugte Titanverbindungen zum Einsatz in der vorliegenden Erfindung sind die bereits vorstehend genannten Tetraalkoxide, insbesondere Tetra-n-butyl-orthotitanat (TNBT) sowie Tetra-iso-propyltitanat (TIPT).

Die Titankomponente ist vorzugsweise in der erfindungsgemäßen Zusammensetzung in einer Menge vorhanden, so dass eine Titankonzentration von 0,5 bis 50, bevorzugt 1 bis 30 ppm Titan resultiert, relativ zur Gesamtzusammensetzung der erfindungsgemäßen Zusammensetzung.

Die erfindungsgemäße Zusammensetzung kann eine Titanverbindung oder auch zwei oder mehr Titanverbindungen umfassen. Bevorzugt umfasst die erfindungsgemäße Zusammensetzung entweder eine Titanverbindung oder zwei Titanverbindungen, wobei wenn zwei Titanverbindungen vorliegen diese in einem Verhältnis von 1 : 10 bis 10 : 1, relativ zueinander, vorliegen, bevorzugt in einem Verhältnis von 1 : 5 bis 5:1, weiter bevorzugt in einem Verhältnis von 1 : 3 bis 3 : 1. Eine besonders bevorzugte Kombination von zwei Titanverbindungen ist die Kombination von TNBT mit TIPT. Bevorzugt ist in diesem Zusammenhang, wenn die erfindungsgemäße Zusammensetzung einen höheren Anteil an TIPT umfasst, bevorzugt sind in diesem Zusammenhang insbesondere Verhältnisse von 1 : 5 bis 1 : 2, insbesondere 1 : 3 (TNBT : TIPT). (Verhältnis ppm Ti/ppm Ti).

Erfindungswesentlich ist weiterhin, wie bereits vorstehend ausgeführt, dass die erfindungsgemäße Zusammensetzung ein schwefelhaltiges Silikat umfasst. Dieses schwefelhaltige Silikat ist insbesondere bevorzugt ein schwefelhaltiges Alumosilikat, insbesondere ein Ultramarin-Blaupigment. Ein geeignetes Beispiel für ein derartiges Pigment ist das Ultramarin-Blaupigment Premier FRX der Firma Holliday Pigments. Das erfindungsgemäß einzusetzende schwefelhaltige Silikat liegt bevorzugt in der Form eines feingemalenen Pulvers vor, insbesondere bevorzugt mit einer Partikelgröße von 2 μm oder weniger, stärker bevorzugt einer Partikelgröße von 1 μm oder weniger. Diese Partikelgröße benennt die erlaubte Obergrenze für die Partikelgröße der einzusetzenden schwefelhaltigen Silikate, d. h. die einzusetzenden Silikatpartikel weisen erfindungsgemäß bevorzugt alle eine Partikelgröße von weniger als 2 μm auf, d. h. es liegen keine Partikel mit einer größeren Partikelgröße vor. Die hierzu im Rahmen der vorliegenden Erfindung verwendete Bestimmungsmethode ist weiter unten beschrieben.

Das schwefelhaltige Silikat liegt bevorzugt in der erfindungsgemäßen Zusammensetzung in einer Menge vor, so dass sich ein Gewichtsverhältnis zum Titan in der Titankomponente von 0,5 : 1 bis 5 : 1 ergibt, bevorzugt 1 : 1 bis 2 : 1.

Die Zusammensetzung der vorliegenden Erfindung umfasst mindestens ein Trägermaterial mit einer spezifischen Oberfläche von 400 m$^2$/g oder größer. Geeignete Beispiele derartiger Trägermaterialien sind Trägermaterialien in Form von Mikropartikeln oder Nanopartikeln, mit einer spezifischen Oberfläche von 400 m$^2$/g oder größer, stärker bevorzugt 500 m$^2$/g oder größer. Erfindungsgemäß bevorzugt ist es in diesem Zusammenhang wiederum, wenn das Trägermaterial in der Form von feingemalenem Pulver vorliegt, beispielsweise mit einer Partikelgröße von 2 μm oder weniger, bevorzugt 1 μm oder weniger. Diese Partikelgröße benennt die erlaubte Obergrenze für die Partikelgröße der einzusetzenden Trägermaterialien, d. h. die einzusetzenden Trägerpartikel weisen erfindungsgemäß bevorzugt alle eine Partikelgröße von weniger als 2 μm auf, d. h. es liegen keine Partikel mit einer größeren Partikelgröße vor. Die hierzu im Rahmen der vorliegenden Erfindung verwendete Bestimmungsmethode ist weiter unten beschrieben.

Wie vorstehend ausgeführt, umfasst eine erfindungsgemäße Zusammensetzung mindestens ein Trägermaterial mit einer großen spezifischen Oberfläche, auf die die erfindungsgemäß einzusetzende Titankomponente aufgebracht werden kann. In diesem Zusammenhang wird auf die WO 02/090419 verwiesen und die Offenbarung dieser Vorveröffentlichung ist im Hinblick auf die Herstellung derartiger Zusammensetzungen mit umfasst. Ein weiterer Vorteil des Einsatzes einer derartigen Trägersubstanzkomponente ist die Tatsache, dass derartige Trägermaterialien den Reaktionsfortschritt behindernde, also inhibierende Stoffe, wie Reaktionswasser, Verunreinigungen aus Rohstoffen und bei der Reaktion sich bildenden Abbauprodukten, absorbieren, so dass die nachteiligen Einflüsse derartiger Nebenkomponenten reduziert oder gänzlich vermieden werden können. Dies ist ein weiterer überraschender Vorteil dieser besonders bevorzugten Ausführungsform der vorliegenden Erfindung.

Geeignete Trägermaterialen, die erfindungsgemäß verwendet werden können, sind Tonerdematerialien und Aktivkohle. Erfindungsgemäß geeignet sind auch Mischungen von Trägermaterialien, insbesondere Mischungen von Tonerde und Aktivkohle. In derartigen Mischungen ist es jedoch bevorzugt, wenn die Aktivkohle lediglich in einem sehr geringen Anteil eingesetzt wird, bevorzugt in einem Verhältnis (Gewichtsverhältnis zur eingesetzten Tonerde) von 0,5 : 5 bis 0,5 : 20, stärker bevorzugt 1 : 5 bis 1 : 20.

Das Trägermaterial wird, im Hinblick auf die Titankomponente, in der erfindungsgemäßen Zusammensetzung bevorzugt in einer Menge eingesetzt, so dass ein Gewichtsverhältnis (Trägermaterial : Titan) von 1 : 4 bis 4 : 1 resultiert, stärker bevorzugt 1 : 2 bis 2:1. Wird Tonerde als Trägermaterial verwendet, so ist ein bevorzugtes Gewichtsverhältnis von Tonerde zu Titan im Bereich 0,5 bis 2,0:1. Wird Aktivkohle als Trägermaterial verwendet, so ist ein bevorzugtes und geeignetes Gewichtsverhältnis von Aktivkohle zu Titan von 0,01 bis 0,1 : 1. Diese Angaben gelten für den Einsatz einer einzelnen Trägermaterialkomponente. Wird dagegen eine Mischung an Trägermaterialien eingesetzt, insbesondere eine Mischung, wie vorstehend ausgeführt, von Tonerde mit Aktivkohle so ist ein bevorzugtes Verhältnis von Aktivkohle : Tonerde : Titankomponente wie folgt:

(0-1): (5-20) : 10

Die erfindungsgemäße Zusammensetzung kann neden den oben gerannker und diskuhirker wesenkidan Bestandkiten nod weitere Komponenten umfassen.

Weiterhin kann die erfindungsgemäße Zusammensetzung zusätzliche Komponenten, wie Stabilisatoren, Suspensionsmittel, usw. umfassen. Insbesondere bevorzugt ist der Einsatz eines Suspensionsmittels, so dass die erfindungsgemäße Zusammensetzung in der Form einer Suspension hergestellt und bei der Herstellung von Polyester dosiert werden kann. Geeignete Suspensionsmittel sind entweder Flüssigkeiten, die an der Kondensationsreaktion nicht teilnehmen oder aber auch Diolkomponenten, wie Ethylenglycol, Propylenglycol, Butylenglycol usw., die in Abhängigkeit vom gewünschten Endprodukt ausgewählt werden. Insbesondere bevorzugt ist in diesem Zusammenhang Ethylenglycol, insbesondere wenn die erfindungsgemäße Zusammensetzung als Katalysator zur Herstellung von Polyethylenterephthalat (PET) einzusetzen ist.

Die erfindungsgemäße Zusammensetzung ist, wie vorstehend ausgeführt, geeignet zur Katalyse der verschiedenen Verfahrensschritte bei der Herstellung von Polyestern, umfassend Veresterung, Umesterung sowie Kondensation. Insbesondere ist die erfindungsgemäße Zusammensetzung geeignet zur Katalyse der Kondensation, wobei die erfindungsgemäße Zusammensetzung auch insbesondere geeignet ist zum Einsatz bei der Festphasenkondensation von Polyestermaterialien zur weiteren Erhöhung der Grenzviskosität, um Materialien zu erhalten, die insbesondere auch im Verpackungsbereich oder im Textilbereich eingesetzt werden können.

Die erfindungsgemäße Zusammensetzung ist zur Katalyse bei der Herstellung von Polyestern geeignet, insbesondere auch zur Herstellung von Polyestern für den Verpackungsbereich, wobei das erhaltene Polyesterprodukt gute Farbwerte aufweist, bei geringen Acetaldehydgehalten, einer zufrieden stellenden Trübung und wobei weiterhin die Polykondensationszeiten den industriellen Anforderungen an vergleichsweise kurze Reaktionszeiten (d.h. schnelles Fortschreiten der Kondensationsreaktion) genügen. Überraschend ist in diesem Zusammenhang insbesondere, dass die erfindungsgemäße Zusammensetzung, insbesondere die hier beschriebenen bevorzugten Ausführungsformen, in der Lage sind eine ausreichend schnelle Kondensationsreaktion auch in der Festphase zu katalysieren, so dass insbesondere Polyestermaterialen für Verpackungsanwendungen, beispielsweise PET-Materialien für Verpackungsanwendungen erhalten werden können, wobei, wie bereits vorstehend ausgeführt, zufrieden stellende Farbwerte und Trübungswerte erhalten werden.

In diesem Zusammenhang wurde erfindungsgemäß überraschend festgestellt, dass die einzusetzende Silikatkomponente nicht nur die Farbwerte des erhaltenen Produkts positiv beeinflusst sondern auch einen positiven Einfluss auf die benötigte Polykondensationszeit hat. Insbesondere durch die nachfolgend beschriebenen Beispiele und Vergleichsbeispiele wird deutlich, dass die erfindungsgemäß einzusetzenden schwefelhaltigen Silikate zu einer überraschenden Verringerung der Polykondensationszeit führen (im Hinblick auf ein gewünschtes Endprodukt, definiert in den Beispielen über eine Zielviskosität von 0,62 bis 0,63 dl/g (Grenzviskosität)).

Der Einsatz der Trägermaterialien führt ebenfalls zu einer Verringerung der Polykondensationszeit, was insbesondere auch für die Mischungen an Trägermaterialien gilt, insbesondere die Mischungen, die Tonerde und Aktivkohle umfassen.

Es ist bevorzugt, wenn die katalytisch wirksame Titankomponente auf dem Trägermaterial adsorbiert vorliegt, beispielsweise durch Imprägnierungsverfahren, wie sie im Stand der Technik bekannt sind. In diesem Zusammenhang wird insbesondere auch die EP 1 031 590 A2 verwiesen, die hier durch Verweis mit umfasst ist.

Insgesamt kann erfindungsgemäß also ein deutlich verbessertes Herstellungsverfahren für Polyester zur Verfügung gestellt werden, das dadurch gekennzeichnet ist, dass die erfindungsgemäße Zusammensetzung als Katalysator eingesetzt wird.

Im Hinblick auf die Verfahrensführung bei der Herstellung von Polyestern wird auf den Wissensstand des Durchschnittsfachmanns verwiesen, sowie insbesondere auf die bereits oben diskutierten Veröffentlichungen EP 1 031 590 A2 sowie WO 02/090419, die im Hinblick auf das Herstellungsverfahren für Polyester hier durch Verweis mit umfasst sind.

Die erfindungsgemäße Zusammensetzung zeigt darüber hinaus keinen Aktivitätsverlust des Titankatalysators durch Ausfällung, wobei der Katalysator darüber hinaus auch nicht nachteilig durch die Anwesenheit anderer üblicher Komponenten beeinflusst wird. Ein Beispiel dafür ist die Tatsache, dass das erfindungsgemäße Katalysatorsystem bei der Herstellung von textilen Polyestermaterialien, beispielsweise PET-Materialien, durch die Anwesenheit von Mattierungsmitteln, wie Titandioxid, keine Beeinträchtigung erfährt. Auch die Anwesenheit von Phosphorverbindungen, die als Stabilisator eingesetzt werden, wie Triethylenphosphonoacetat oder Carboxyethylenphosphonsäureethylenglycolester, hat keinen nachteiligen Effekt auf die katalytische Wirksamkeit der erfindungsgemäßen Zusammensetzung. Die erfindungsgemäße Zusammensetzung ist, wie bereits vorstehend ausgeführt, auch für die Herstellung von Polyestermaterialien für Verpackungsanwendungen, sowohl in der Schmelze als auch in der anschließenden Festphasenkondensation hoch aktiv und ergibt ein klares Endprodukt mit guter Eigenfarbe.

Die vorliegende Erfindung wird durch die nachfolgenden Beispiele näher illustriert.

## **Beispiele**

Bestimmungsverfahren:

Grenzviskosität (IV): Die Grenzviskosität wurde bei 25°C mit einer Lösung von 500 mg Polyester in 100 ml eines Gemisches aus Phenol und 1,2-Dichlorbenzol (3 : 2 Gewichtsteile) in üblicher Weise bestimmt.

Die Messung der Farbwerte L und b erfolgte nach HUNTER. Die Polyesterchips wurden zunächst im Trockenschrank bei 135 ± 5°C während einer Stunde kristallisiert. Die Farbwerte wurden danach ermittelt, indem in einem Dreibereichfarbmessgerät der Farbton der Polyesterprobe mit drei Photozellen, denen je ein Rot-, Grün-, Blaufilter vorgeschaltet war, gemessen wurde (X-,Y-, und Z-Werte). Die Auswertung erfolgte nach der Formel von HUNTER mit den folgenden Maßgaben:

$$L = 10 \sqrt{Y}$$

$$b = 7{,}0 / \sqrt{Y} - 0{,}8467 \, Z$$

Die Messung des Trübungswertes in nephelometrischen Trübungseinheiten (NTU) für die Polyestermaterialien erfolgte an einer 10 Gew.-%igen Lösung von Polyester in Phenol/Dichlorbenzol (3 : 2 Gewichtsteile) mit einem Nephelometer der Firma Hach (Typ XR, nach US-Patent 4,198,161) in einer Küvette mit einem Durchmesser von 22,2 mm in Analogie zu der für Wasser gebräuchlichen Norm DIN 38404, Teil 2. Gemessen wird die Intensität des Streulichts im Vergleich zu einer Formazin-Standardlösung abzüglich des Wertes des Lösungsmittels (ca. 0,3 NTU).

Der Acetaldehydgehalt wurde bestimmt durch Erhitzen einer Polyesterprobe in einem geschlossenen Gefäß, wobei die Menge an Acetaldehyd im Gasraum des Gefäßes gaschromatographisch durch Head-Space Chromatographie bestimmt wurde, Injektionssystem HS40, Perkin Elmer, Trägergas, Stickstoff, Säule 1,5 m Edelstahl, Füllung Poropack Q, 80 bis 100 mesh, Probemenge 2 g, Heiztemperatur 150°C, Heizdauer 90 min.

Die Partikelgröße wird als Suspension an einer HORIBA CAPA-700 Zentrifuge bestimmt. Dazu wird ein Tropfen (ca. 0,5 ml) der zu untersuchenden Suspension in ca. 50 ml eines geeigneten Suspensionsmittels verdünnt, anschließend im Ultraschallbad etwa 10 Min. fein verteilt und dann nach Bestimmung und Eingabe der temperaturabhängigen Viskosität der zu untersuchenden Suspension die Korngrößenverteilung gemessen. Es werden die Verteilungskurve, die mittlere Korngröße und die maximale Korngröße bestimmt.

Die spezifische Oberfläche wird mit der bekannten BET-Methode nach DIN 66131 ermittelt.

Beispiele und Vergleichsbeispiele

Ausgangsprodukt für alle nachfolgend dargestellten Versuche war ein vollkommen katalysatorfreies Veresterungsprodukt aus Terephthalsäure und Ethylenglycol mit den folgenden analytischen Daten:

| IV | 0,205 dl/g |
|----|------------|
| Vz | 565 mg KOH/g |
| Sz | 21 mg KOH/g |
| U | 96% |

Die Verseifungszahl Vz wurde durch Verseifung mit Kaliumhydroxid in n-Propanol und potentiometrische Titration mit Dimethylformamid bestimmt. Die Säurezahl Sz des in N,N-Dimethylformamid gelösten Veresterungsproduktes wurde mittels photometrischer Titration mit 0,05 ethanolischer Kalilauge gegen Bromthymolblau bestimmt. Der Veresterungsgrad (U) wurde aus der Verseifungszahl und der Säurezahl des Reaktionsgemisches gemäß der folgenden Gleichung berechnet:

$$U = (Vz\text{-}Sz) \times 100/Vz$$

Herstellung der katalytisch aktiven Zusammensetzung

In Beispiel 1 wurde Tetra-n-butyl-orthotitanat (TNBT) in Ethylenglycol mit 2 Gew.-% Ti in der Lösung verwendet.

Die Herstellung der katalytisch aktiven Zusammensetzungen für die Beispiele 2 bis 13 erfolgt in Übereinstimmung mit der Beschreibung in der EP 1 031 590, erstes Ausführungsbeispiel mit Aktivkohle in Ethylenglycol, nur dass zusätzlich zu oder an Stelle der Aktivkohle für die Versuche in der vorliegenden Anmeldung in den in der Tabelle 1 angegebenen Verhältnissen eine Tonerde (40 Gew.-% Siliciumdioxid, 60 Gew.-% Aluminiumtrioxid, mit der Handelsbezeichnung Siralox 40/480 der Firma Sasol mit einer spezifischen Oberfläche von 468 $m^2$/g) eingesetzt wurde. Weiterhin wurde die Titankomponente variiert (wie in Tabelle 2 angegeben (Ti K1=TNBT/Ti K2=TIPT)) und in den Versuchen 3 bis 12 (erfindungsgemäße Versuche) wurde zusätzlich das Ultramarin-Blaupigment Premier SRX der Firma Holliday Pigments zugegeben.

Tabelle 1

| Versuch Nr. | Gehalte in den ethylenglykolischen Katalysatorsuspensionen | | | |
| --- | --- | --- | --- | --- |
| | Ti [Gew.-%] | Siralox [Gew.-%] | Kohlenstoff [Gew.-%] | Premier FRX [Gew.-%] |
| 1 | 2,010 | 0 | 0 | 0 |
| 2 | 2,350 | 0,706 | 0 | 0 |
| 3 | 2,350 | 0,706 | 0 | 1,567 |
| 4 | 2,350 | 0,706 | 0 | 3,134 |
| 5 | 2,350 | 0,706 | 0,157 | 1,567 |
| 6 | 2,350 | 0,706 | 0,392 | 1,567 |
| 7 | 2,161 | 0,648 | 0,432 | 1,441 |
| 8 | 2,240 | 0,672 | 0,149 | 1,494 |
| 9 | 2,300 | 0,690 | 0,153 | 1,533 |
| 10 | 2,240 | 0 | 0,448 | 2,240 |
| 11 | 2,240 | 1,008 | 0 | 2,240 |
| 12 | 2,240 | 1,008 | 0,112 | 2,240 |

Die Teilchengröße der Feststoffe in den hergestellten Katalysatorzusammensetzungen war in allen Fällen weniger als 2 μm.

Polykondensationsversuche

Die Polykondensationsansätze umfassen je 5.000 g des Veresterungsprodukts, die angegebene Menge an katalytisch aktiver Zusammensetzung, 10 ppm Phosphor aus Triethylenphosphonacetat (Firma Rhodia) und die folgenden Additive:

Versuche 1-9: 0,4 Gew.-% $TiO_2$ (Hombitan LW-SU der Firma Sachtleben)

Versuche 10-12: 1,5 Gew.-% Diethylenglycol und 2,0 Gew.-% Isophthalsäure

(Mengenangaben beziehen sich jeweils auf das Veresterungsprodukt)

Die Kondensationsansätze wurden nach sorgfältiger Spülung des Reaktors mit Stickstoff bei 275°C innerhalb von 50 min unter Atmosphärendruck aufgeschmolzen. Danach wurde innerhalb von 50 min der Druck allmählich auf 0,1 mbar gesenkt und die Temperatur auf 280°C angehoben und anschließend polykondensiert. Die Polykondensation wurde nach Erreichen der Zielviskosität von 0,62 bis 0,63 dl/g abgebrochen (Stromaufnahme des Rührers war über eine entsprechende Kalibrierung Führungsgröße im Hinblick auf die Zielviskosität). Das erhaltene Polykondensat wurde granuliert und anschließend analysiert. Die Ergebnisse sind in Tabelle 2 zusammengefasst.

Tabelle 2

| Versuch Nr. | Ti K1/Ti K2 [ppm] | Siralox [ppm] | Kohlen-stoff [ppm] | TiO$_2$ [Gew-%] | Premier FRX [ppm] | IV [dl/g] | Polykondens. Zeit [min] | Farbzahl L (Chip, krist.) | Farbzahl b Chip, krist.) |
|---|---|---|---|---|---|---|---|---|---|
| 1 | 15/0 | 0 | 0 | 0,4 | 0 | 0,630 | 109 | 86,5 | 12 |
| 2 | 15/0 | 4,5 | 0 | 0,4 | 0 | 0,622 | 101 | 87,3 | 11,2 |
| 3 | 15/0 | 4,5 | 0 | 0,4 | 10 | 0,625 | 100 | 85,8 | 7,4 |
| 4 | 15/0 | 4,5 | 0 | 0,4 | 20 | 0,629 | 96 | 83,4 | 7,0 |
| 5 | 15/0 | 4,5 | 0,1 | 0,4 | 10 | 0,621 | 98 | 86,5 | 4,6 |
| 6 | 15/0 | 4,5 | 0,25 | 0,4 | 10 | 0,623 | 94 | 82,5 | 4,7 |
| 7 | 15/0 | 4,5 | 3 | 0,4 | 10 | 0,621 | 104 | 77,1 | 3,9 |
| 8 | 3,75/11,25 | 4,5 | 0,1 | 0,4 | 10 | 0,624 | 95 | 86,2 | 4,4 |
| 9 | 0,/15 | 4,5 | 0,1 | 0,4 | 10 | 0,622 | 105 | 86,3 | 4,2 |
| 10 | 2,5/7,5 | 0 | 2 | 0 | 10 | 0,623 | 131 | 74,4 | 1,7 |
| 11 | 2,5/7,5 | 4,5 | 0 | 0 | 10 | 0,625 | 97 | 81,2 | 0,2 |
| 12 | 2,5/7,5 | 4,5 | 0,5 | 0 | 10 | 0,626 | 94 | 79,2 | -0,3 |

Zur Beurteilung des Verhaltens der Granulate der Versuche 10 bis 12 in der Festphasenkondensation (SSP) wurden diese 60 min in einem inertisierten Trockenschrank bei 210°C kristallisiert und anschließend in einem zylindrischen Laborbehälter bei 210°C unter Rühren und einem trockenen Stickstoffstrom von 20l/h in der Festphase polykondensiert. Die erhaltenen Ergebnisse sind in der nachfolgenden Tabelle 3 zusammengefasst.

Tabelle 3

| Versuch Nr. | Polyester nach Festphasenkondensation | | | |
|---|---|---|---|---|
| | $\Delta$IV/h [dl/g] | Trübung [NTU] | Acetaldehydgehalt [ppm] | Farbwerte L/b |
| 10 | 0,016 | 1,5 | <1 | 79,5/3,7 |
| 11 | 0,024 | 3,1 | <1 | 86,3/1,9 |
| 12 | 0,024 | 2,7 | <1 | 85,2/1,3 |

Die in der vorliegenden Anmeldung offenbarten Versuche und Vergleichsversuche (Versuche 1, 2 und 10) zeigen eindeutig die verbesserte Wirksamkeit der erfindungsgemäßen Zusammensetzung, im Vergleich mit Zusammensetzungen, die kein schwefelhaltiges Silikat enthalten. Weiterhin zeigen die Beispiele darüber hinaus, dass durch den Zusatz von Trägermaterialien eine weitere Verbesserung erreicht werden kann, insbesondere eine Verbesserung der Polykondensationszeiten.

Erfindungsgemäß wird somit ein verbessertes katalytisch wirksames System zur Herstellung von Polyestern zur Verfügung gestellt, wodurch Polyestermaterialien in der guten Qualität in zufrieden stellenden Reaktionszeiten erhalten werden können, so dass insbesondere auch die industriellen Anforderungen erfüllt werden können. Die Ergebnisse der Festphasenkondensation zeigen weiterhin, dass durch die erfindungsgemäßen Zusammensetzungen auch eine sehr gute Aktivität in der Festphase gesichert werden kann, mit Raten für die Zunahme der Grenzviskosität von 0,015 bis 0,025 dl/g pro Stunde, wobei insbesondere die Versuche 11 und 12 sehr hohe Festphasenaktivität zeigen (Zunahmeraten von 0,021 bis 0,023 dl/g pro Stunde werden im Stand der Technik als sehr gut angesehen).

Hervorzuheben ist in diesem Zusammenhang, dass die erfindungsgemäß zu erhaltenen Vorteile auf der Kombination der wesentlichen Komponenten beruhen. Die vorstehenden Beispiele und Vergleichsbeispiele zeigen deutlich, dass die Zusammensetzung, geeignet als Katalysator bei der Herstellung von Polyester, umfassend mindestens eine Titanverbindung sowie ein schwefelhaltiges Silikat, wie vorstehend definiert, eine deutliche Verbesserung der katalytischen Aktivität zur Verfügung stellt, wobei auch das schwefelhaltige Silikat einen positiven Einfluss auf die katalytische Wirksamkeit hat. Diese Komponente, die im Stand der Technik als Farbstoff bekannt ist, zeigt also in Kombination mit einer Titankomponente eine überraschende katalytische Wirksamkeit bei der Herstellung von Polyester.

**Patentansprüche**

1.  Katalysator für die Herstellung von Polyester, umfassend:

    mindestens eine Titanverbindung sowie ein schwefelhaltiges Silikat, weiter umfassend mindestens ein Trägermaterial mit einer spezifischen Oberfläche von 400 m$^2$/g oder mehr.

2.  Katalysator nach Anspruch 1, wobei zwei Titanverbindungen enthalten sind.

3.  Katalysator nach einem der vorstehenden Ansprüche, wobei das schwefelhaltige Silikat ein Alumosilikat ist.

4.  Katalysator nach Anspruch 1, wobei als Trägermaterial ein Material eingesetzt wird, ausgewählt aus der Gruppe bestehend aus Tonerde, Aktivkohle und Mischungen davon.

5.  Katalysator nach einem der vorstehenden Ansprüche 1 bis 4, weiter umfassend Ethylenglycol.

6.  Katalysator nach einem der vorstehenden Ansprüche 1 bis 5, wobei der Katalysator 1 bis 30 ppm Titan enthält.

7.  Katalysator nach einem der vorstehenden Ansprüche 1 bis 6, wobei die Titanverbindung ausgewählt ist unter Tetra-n-butyl-orthotitanat, Tetra-iso-propyltitanat und Mischungen davon.

8.  Katalysator nach einem der vorstehenden Ansprüche 1 bis 7, wobei das schwefelhaltige Silikat und Titan in der Zusammensetzung in einem Gewichtsverhältnis von 1 : 1 bis 2 : 1 vorliegen.

9. Katalysator nach Anspruch 4, wobei Tonerde zu Titan in einem Gewichtsverhältnis von 0,5 bis 2,0 : 1 vorliegen.

10. Katalysator nach Anspruch 4, wobei Aktivkohle zu Titan in einem Gewichtsverhältnis von 0,01 bis 0,1 : 1 vorliegen.

11. Verfahren zur Herstellung von Polyester, **dadurch gekennzeichnet, dass** als Katalysatorzusammensetzung ein Katalysator nach einem der Ansprüche 1 bis 10 verwendet wird.

12. Verfahren nach Anspruch 11, wobei die Katalysatorzusammensetzung vor der Polykondensationsstufe zugesetzt wird.

13. Verfahren nach Anspruch 11 oder 12, wobei weiterhin ein phosphorhaltiger Stabilisator verwendet wird.

14. Verfahren nach Anspruch 13, wobei der phosphorhaltige Stabilisator vor, nach oder gleichzeitig mit der Zugabe der Katalysatorzusammensetzung eindosiert wird.

15. Verfahren nach Anspruch 11, wobei die Katalysatorzusammensetzung zur Festphasenkondensation verwendet wird.

16. Verfahren nach Anspruch 11, wobei der herzustellende Polyester PET ist.

17. Verwendung eines Katalysators nach irgendeinem der Ansprüche 1 bis 10 für die Herstellung von Polyester.

18. Polyester, umfassend einen Katalysator nach einem der Ansprüche 1 bis 10.

19. Polyester nach Anspruch 18, wobei der Polyester PET ist.

20. Verwendung eines Polyesters nach Anspruch 18, zur Herstellung von Flaschen, Filmen, Folien, Faserstoffen und technischen Kunststoffen.


**Claims**

1. Catalyst for producing polyester, comprising:

   at least one titanium compound as well as a sulphur-containing silicate, further comprising at least one substrate material with a specific surface area of 400 $m^2$/g or more.

2. Catalyst according to Claim 1, wherein two titanium compounds are contained.

3. Catalyst according to either of the preceding claims, wherein the sulphur-containing silicate is an alumosilicate.

4. Catalyst according to Claim 1, wherein a material, selected from the group consisting of clay, activated charcoal and mixtures thereof, is used as a substrate material.

5. Catalyst according to any one of the preceding Claims 1 to 4, further comprising ethylene glycol.

6. Catalyst according to any one of the preceding Claims 1 to 5, wherein the catalyst contains 1 to 30 ppm titanium.

7. Catalyst according to any one of the preceding Claims 1 to 6, wherein the titanium compound is selected from tetra-n-butyl orthotitanate, tetra isopropyl titanate and mixtures thereof.

8. Catalyst according to any one of the preceding Claims 1 to 7, wherein the sulphur-containing silicate and the titanium are present in the composition in a weight ratio of 1 : 1 to 2 : 1.

9. Catalyst according to Claim 4, wherein clay is present in a weight ratio of 0.5 to 2.0 : 1 with respect to titanium.

**10.** Catalyst according to Claim 4, wherein activated charcoal is present in a weight ratio of 0.01 to 0.1 : 1 with respect to titanium.

**11.** Method for producing polyester, **characterised in that** a catalyst according to any one of Claims 1 to 10 is used as a catalyst composition.

**12.** Method according to Claim 11, wherein the catalyst composition is added before the polycondensation step.

**13.** Method according to Claim 11 or 12, wherein a phosphorus-containing stabiliser is furthermore used.

**14.** Method according to Claim 13, wherein the phosphorus-containing stabiliser is dosed before, after or simultaneously with the addition of the catalyst composition.

**15.** Method according to Claim 11, wherein the catalyst composition is used for the solid state condensation.

**16.** Method according to Claim 11, wherein the polyester that is to be produced is PET.

**17.** Use of a catalyst according to any one of Claims 1 to 10 for producing polyester.

**18.** Polyester comprising a catalyst according to any one of Claims 1 to 10.

**19.** Polyester according to Claim 18, wherein the polyester is PET.

**20.** Use of a polyester according to Claim 18, for producing bottles, films, foils, fibrous materials and technical plastics.


**Revendications**

**1.** Catalyseur pour la fabrication de polyester, comprenant :

au moins un composé de titane et un silicate soufré, comprenant en outre au moins un matériau support ayant une surface spécifique de 400 m$^2$/g ou plus.

**2.** Catalyseur selon la revendication 1, **caractérisé en ce que** deux composés de titane sont présents.

**3.** Catalyseur selon l'une des revendications précédentes, **caractérisé en ce que** le silicate soufré est un aluminosilicate.

**4.** Catalyseur selon la revendication 1, **caractérisé en ce que** l'on met en oeuvre comme matériau support un matériau choisi dans le groupe constitué par l'argile, le charbon actif et des mélanges de ceux-ci.

**5.** Catalyseur selon l'une des revendications précédentes 1 à 4, **caractérisé en ce qu'**il comprend en outre de l'éthylène glycol.

**6.** Catalyseur selon l'une des revendications précédentes 1 à 5, **caractérisé en ce que** le catalyseur contient 1 à 30 ppm de titane.

**7.** Catalyseur selon l'une des revendications précédentes 1 à 6, **caractérisé en ce que** le composé de titane est choisi parmi l'orthotitanate de tétra-n-butyle, le titanate de tétra-iso-propyle et des mélanges de ceux-ci.

**8.** Catalyseur selon l'une des revendications précédentes 1 à 7, **caractérisé en ce que** le silicate soufré et le titane sont présents dans la composition en un rapport en poids allant de 1/1 à 2/1.

**9.** Catalyseur selon la revendication 4, **caractérisé en ce que** l'argile et le titane sont présents en un rapport en poids de 0,5 à 2,0/1.

**10.** Catalyseur selon la revendication 4, **caractérisé en ce que** le charbon actif et le titane sont présents en un rapport en poids de 0,01 à 0,1/1.

**11.** Procédé de fabrication de polyester, **caractérisé en ce que** l'on utilise comme composition catalytique un catalyseur selon l'une des revendications 1 à 10.

**12.** Procédé selon la revendication 11, **caractérisé en ce que** la composition catalytique est ajoutée avant l'étape de polycondensation.

**13.** Procédé selon la revendication 11 ou 12, **caractérisé en ce que** l'on met en oeuvre en outre un stabilisateur contenant du phosphore.

**14.** Procédé selon la revendication 13, **caractérisé en ce que** le stabilisateur contenant du phosphore est ajouté avant, après ou en même temps que l'addition de la composition catalytique.

**15.** Procédé selon la revendication 11, **caractérisé en ce que** la composition catalytique est utilisée pour la condensation des phases solides.

**16.** Procédé selon la revendication 11, **caractérisé en ce que** le polyester à fabriquer est le PET.

**17.** Utilisation d'un catalyseur selon l'une quelconque des revendications 1 à 10 pour la fabrication de polyester.

**18.** Polyester, **caractérisé en ce qu'**il comprend un catalyseur selon l'une des revendications 1 à 10.

**19.** Polyester selon la revendication 18, **caractérisé en ce que** le polyester est le PET.

**20.** Utilisation d'un polyester selon la revendication 18, pour la fabrication de bouteilles, de films, de feuilles, de matières fibreuses et de plastiques techniques.

**IN DER BESCHREIBUNG AUFGEFÜHRTE DOKUMENTE**

**In der Beschreibung aufgeführte Patentdokumente**

- EP 1031590 A2
- WO 02090419 A
- DE 10339742 A1
- US 20040254330 A1
- DE 4235302
- US 4512928 A
- GB 864799 A
- DE 19627591
- US 5981690 A
- JP 2004202727 A
- US 4198161 A
- EP 1031590 A